Europäisches Patentamt

(19) European Patent Office    (11) Numéro de publication: **0 036 377**
**B1**
Office européen des brevets

(12)    FASCICULE DE BREVET EUROPEEN

(45) Date de publication du fascicule du brevet:    (51) Int. Cl.³: **B 21 D 39/06**
16.05.84

(21) Numéro de dépôt: **81420030.9**

(22) Date de dépôt: **05.03.81**

(54) Méthode d'assemblage par emboîtement à force d'un tube sur un profilé.

(30) Priorité: **17.03.80 FR 8006185**    (73) Titulaire: **CEGEDUR SOCIETE DE TRANSFORMATION DE L'ALUMINIUM PECHINEY, 66, Avenue Marceau, F-75361 Paris Cédex 08 (FR)**

(43) Date de publication de la demande:
**23.09.81 Bulletin 81/38**    (72) Inventeur: **Colas, François, 10, Avenue du Petit Chambord, F-92340 Bourg-la-Reine (FR)**

(45) Mention de la délivrance du brevet:
**16.05.84 Bulletin 84/20**    (74) Mandataire: **Séraphin, Léon et al, PECHINEY 28, rue de Bonnel, F-69433 Lyon Cedex 3 (FR)**

(84) Etats contractants désignés:
**BE DE GB IT**

(56) Documents cités:
**FR - A - 1 431 719**
**FR - A - 2 277 967**
**FR - A - 2 356 463**
**GB - A - 657 746**
**GB - A - 1 246 630**
**US - A - 3 477 120**

BUNDESDRUCKEREI BERLIN

Méthode d'assemblage par emboîtement à force d'un tube sur un profile

La présente invention concerne une méthode d'assemblage par emboîtement à force d'un tube sur un profilé, à l'aide d'une bague intermédiaire, le plus souvent de même section que le tube, les parois du tube et de la bague étant relativement minces par rapport à leur diamètre. L'extrémité du tube pris pour mâle, et celle de la bague femelle, qui doivent s'emboîter l'un dans l'autre, sont respectivement chanfreinée en biseau et alésée coniquement avant emboîtement.

Cette méthode peut être avantageusement utilisée pour assembler des barreaux transversaux sur une membrure longitudinale, par exemple pour la réalisation de balustrades ou d'échelles. Elle peut aussi être utilisée pour l'assemblage de beaucoup d'autres pièces respectivement solidaires d'éléments de tubes mâles ou bagues femelles. On peut ainsi assembler des panneaux destinés à divers usages, la construction de bâtiment par exemple.

L'assemblage de tubes de sensiblement mêmes sections par emboîtement à force est connue par divers brevets. Pour avoir un assemblage particulièrement résistant, le FR-A-2 356 463 préconise d'enserrer, au moment de l'emboîtement, le tube pris pour femelle dans une matrice indéformable empêchant toute dilatation de ce tube. La méthode selon l'invention s'en distingue essentiellement par l'absence de cette matrice.

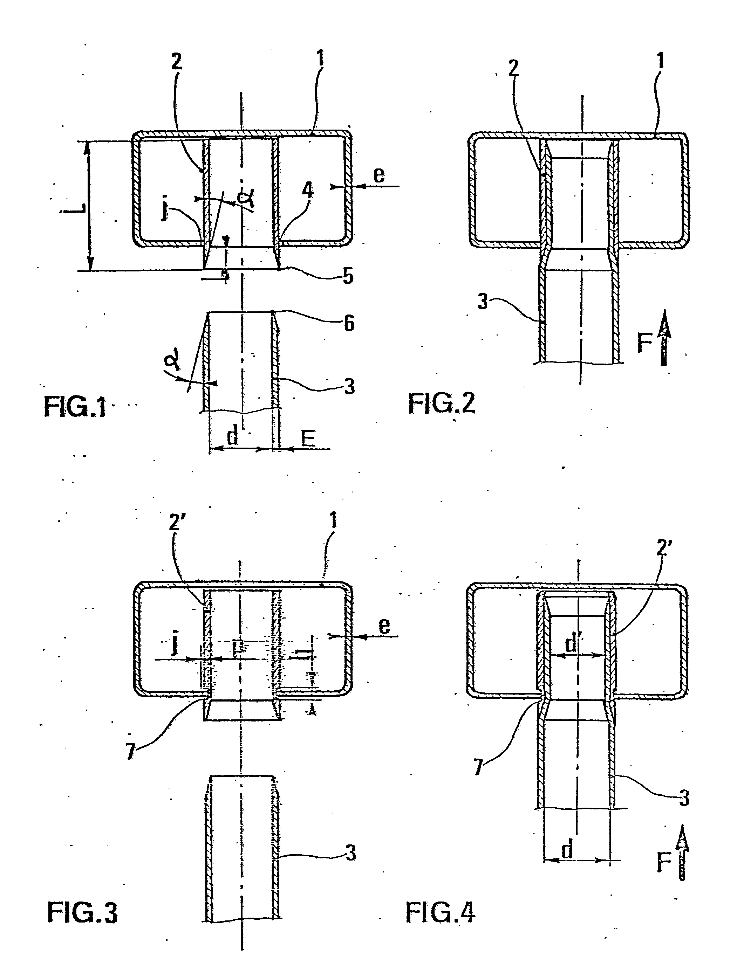

Un assemblage du même genre est également décrit dans le brevet GB-A-12 46 630. Cependant, on doit remarquer que dans cet assemblage la bague est la partie mâle et le tube est la partie femelle; il en résulte que la partie chanfreinée (5) du tube mâle (4) est obligatoirement à l'intérieur du profilé (2); de plus, pour introduire le tube femelle à travers l'ouverture (10), comme indiqué à la fig. 3, il faut nécessairement un certain jeu positif entre le diamètre de cette ouverture et le diamètre extérieur du tube femelle. Il en résulte forcément une liaison qui présente un jeu résiduel et qui la rend inapte à supporter des efforts transversaux répétés; cette défectuosité est absolument éliminée, dans l'assemblage que nous revendiquons, qui est parfaitement rigide.

La présente invention consiste en une méthode d'assemblage d'un tube mince sur un profilé tubulaire à l'aide d'une bague intermédiaire ayant sensiblement les mêmes dimensions transversales et en matériau semblable, le tube mince étant chanfreiné extérieurement et la bague intermédiaire étant alésée coniquement à une de leurs extrémités, caractérisée en ce que:

a) on usine dans le profilé un orifice dont le diamètre est égal au diamètre externe du tube ou de la bague, majoré d'un jeu j adéquat,

b) on introduit la bague intermédiaire dans l'orifice de manière à ce que la base de son extrémité alésée coniquement soit extérieure au profilé tubulaire lorsque son autre extrémité s'appuie sur l'autre paroi du profilé,

c) on force le tube mince dans la bague intermédiaire par son extrémité chanfreinée de manière à dilater la bague dans l'orifice.

Lors de l'emboîtement du tube mâle, la bague femelle peut se dilater au niveau de l'ouverture jusqu'à ce qu'elle soit frettée dans cette ouverture; on peut, par ce moyen, assembler une pièce solidaire du tube mâle aussi bien avec une pièce solidaire de la bague femelle, qu'avec une pièce solidaire du profilé. Si l'ouverture est percée dans un profilé plein de section rectangulaire, on la dégnera par anneau.

Le tube, la bague ainsi que l'ouverture peuvent avoir une forme de révolution, mais ils peuvent tout aussi bien avoir une forme cylindrique de section quelconque, telle qu'elliptique ou rectangulaire.

Avant assemblage, on peut usiner autour de la bague femelle, au niveau où doit se trouver l'ouverture du profilé après assemblage, une rainure de hauteur au moins égale à l'épaisseur du profilé. Lors de la dilatation du tube femelle au moment de l'emboîtement de la bague, l'anneau se trouve encastré dans la rainure.

Si le jeu radial j entre la bague femelle et l'ouverture est relativement important tandis que la rainure est usinée avec une profondeur p telle que $j + p > E$, E étant l'épaisseur du tube, on obtient un assemblage à rotation autour de l'axe du tube. Le profilé (ou l'anneau) peut alors tourner librement dans la rainure du tube.

L'invention peut être utilisée par exemple pour assembler des barreaux sur un profilé tubulaire perforé d'orifices disposés à intervalles réguliers correspondant à l'espacement des barreaux. On peut ainsi fabriquer économiquement des balustrades ou des échelles.

L'invention sera mieux comprise par la description ci-après de quelques exemples particuliers illustrés par les figures jointes. La

fig. 1 représente en coupe un barreau qui est présenté en face d'un orifice d'un profilé, une bague à embouchure femelle est déjà en place dans l'orifice. La

fig. 2 représente les mêmes éléments que la fig. 1 après emboîtement à force de l'extrémité du barreau dans la bague, qui se trouve frettée dans l'orifice du profilé. La

fig. 3 représente le même barreau et le même profilé qu'en fig. 1. Une rainure a été usinée autour de la bague au niveau de l'orifice du profilé. La

fig. 4 représente les mêmes éléments que la fig. 3 après emboîtement à force de l'extrémité du barreau dans la bague. La

fig. 5 représente les mêmes éléments que la fig. 2, mais à plus grande échelle. La bague est longue et dépasse l'orifice. La

fig. 6 représente un assemblage par emboîtement dans le cas où la bague est courte et où la partie alésée coniquement de la bague s'étend de part et d'autre de l'orifice du profilé.

En fig. 1, on voit en coupe un profilé tubulaire (1), une bague (2) et l'extrémité d'un barreau (3). La bague (2) de longuer L, peu supérieure à l'épaisseur du profilé (1), a été découpée dans un tube d'alumi ium de diamètres 16/18, identique au tube d'où est tiré le barreau (3). La bague (2) est introduite dans le profilé (1) par un orifice (4) qui a un diamètre égal au diamètre extérieur de la bague (2) majoré d'un léger jeu j; ici, j = 0,1 mm sur le rayon. Une extrémité (5) de la bagu (2) est alésée coniquement sur une longueur 1 en faisant avec l'axe un angle $\alpha$ de l'ordre de 7°. L'extrémité correspondante (6) du barreau a été chanfreinée en biseau selon un même angle $\alpha$. La bague (2) et le tube (3) ont ainsi à leurs extrémités des parois taillées en biseaux donnant des formes mâles et femelles complémentaires destinées à faciliter leur emboîtement ultérieur.

En fig. 2, le barreau (3) a été emboîté à force dans la bague (2) par déplacement dans le sens F. La bague (2) bute contre le fond du profilé (1) et s'est dilatée globalement du jeu 2j entre bague (2) et orifice (4), ayant été empêchée de le faire davantage par son frettage dans le bord de l'orifice (4). Ce blocage maintient fermement assemblée la bague (2) dans le profilé (1) tandis que le barreau (3) est assemblé à la (2) par emboîtement à force avec contraction. Cet assemblage est très résistant, de façon analogue à celui décrit dans le brevet FR 23 56 463.

En fig. 3, on voit une bague (2'), très semblable à la bague (2) des fig. 1 et 2, emboîtée dans un profilé (1) identique au précédent. La bague (2') a même mongueur L et les mêmes diamètres interne et externe de 16 et 18 mm que la bague (2). La seule différence entre la bague (2') et la bague (2) est la rainure périphérique (7) de hauteur h = 2,5 mm et de profondeur p = 0,2 mm au niveau de la bague correspondant à l'orifice (4) du profilé (1). L'épaisseur e de la paroi du profilé (1) est de 2 mm.

En fig. 4, l'extrémité d'un barreau (3) identique à celui précédemment décrit, a été emboîté à force dans la bague par déplacement dans le sens F. Dans cet exemple, la bague (2') a pu se dilater au niveau de l'orifice (4) de 2j + 2p, soit de 0,6 mm, ceci grâce à sa rainure (7). Son diamètre intérieur est ainsi passé de 16 mm à 16,6 mm, tandis que le diamètre intérieur d du barreau (3) s'est rétreint dans la partie emboîtée à la valeur d' de l'ordre de 14,6 mm. Le tube (3) est solidement enserré dans la bague (2') sur sensiblement toute la longueur 1, tandis que la bague (2') se trouve elle-même solidement encastrée dans l'orifice (4) par sa rainure (7).

On voit facilement que, si j + p > E avec cependant j < E, la bague (2) se trouve solidaire du profilé (1) par encastrement dans la rainure (7) mais tourne librement autour de son axe. On a réalisé un assemblage à rotation du profilé (1) avec la bague (2) et le tube (3).

On peut réaliser des tubes femelles dont la partie alésée coniquement (5) se trouve à différents niveaux par rapport à l'orifice ou anneau (4).

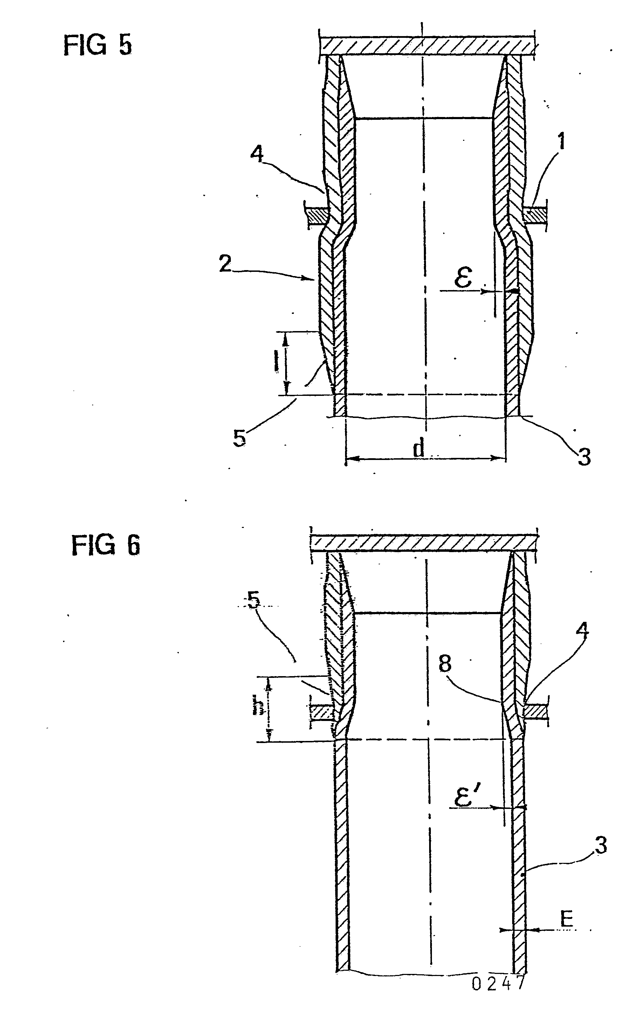

Comme représenté en fig. 1, 2 et 5, la bague (ou anneau) femelle (2) peut dépasser largement l'orivice (4), c'est-à-dire d'une longueur au moins égale à la longueur 1 de sa partie alésée coniquement (5). En ce cas, la partie du tube (2) à l'avant de l'orifice (4) n'est pas maintenue et se dilate sensiblement de l'épaisseur E du barreau (ou tube) mâle (3). Cela est particulièrement visible dans la fig. 5.

Au niveau de l'orifice (4), la bague (2) est frettée et ne peut se dilater; le barreau (3) doit, au contraire, se contracter d'une valeur $\varepsilon$ = E — j sur le rayon. Au-delà de l'orifice (4), la bague (2) n'est plus soutenue et peut se dilater librement sous la poussée du barreau (3), mais celui-ci a été rétreint au passage de l'orifice (4). La dilatation de la bague au-delà de l'orifice (4) est faible; elle correspond au retour élastique du tube avec également un léger refoulement de métal. Pour une meilleure compréhension, la dilatation a été représentée de façon très exagérée sur les fig. 5 et 6. On comprend cependant que le fait que la bague (2) soit dilatée, même de façon minime, de part et d'autre de l'orifice (4) assure une excellente liaison entre le barreau, la bague et l'orifice.

En fig. 6, la partie alésée coniquement (5) de l'anneau dépasse l'orifice (4) de part et d'autre. Le barreau mâle (3) est rétreint au niveau de l'orifice (4), mais reste cylindrique au-delà. On voit que la bague (2) est nettement dilatée de part et d'autre de l'orifice (4); on a une excellente tenue de cette bague dans l'orifice (4). Le barreau (3) ne s'est contracté que de $\varepsilon'$ inférieur à $\varepsilon$.

On peut réaliser sur une même bague (2) plusieurs rainures (7) successives et assembler plusieurs anneaux ou parois (1) par leur orifices (4) parallèles.

Ce dispositif d'assemblage peut être utilisé pour beaucoup d'autres réalisations que celles de ballustrades et échelles. Ainsi, une série de tubes mâles (3) peut être solidaire d'un panneau de cloison et des éléments de profilés (1) ou de bagues (2) noyés dans un autre panneau.

En disant que les deux tubes (2) et (3) ont »sensiblement« mêmes sections, cela signifie que l'on peut sans difficulté utiliser, par exemple, un barreau (3) de diamètres 16—18 mm avec une bague (2) de diamètres 15—18 mm ou inversement.

## Revendications

1. Procédé d'assemblage d'un tube mince (3) sur un profilé éventuellement tubulaire (1) à l'aide d'une bague intermédiaire (2) ayant sensiblement les mêmes dimensions transversales et en matériau semblable, le tube mince (3) étant chanfreiné extérieurement (6) et la bague intermédiaire (2) étant alésée coniquement (5) à une de leurs extrémités, caractérisé en ce que:

a) on usine dans le profilé un orifice (4) dont le diamètre est égal au diamètre externe du tube ou de la bague, majoré d'un jeu j adéquat,

b) on introduit la bague intermédiaire (2) dans l'orifice (4) de manière à ce que la base de son extrémité alésée coniquement (5) soit extérieure au profilé tubulaire (1) lorsque son autre extrémité s'appuie sur l'autre paroi du profilé,

c) on force dans le sens (F) le tube mince (3) dans la bague intermédiaire (2) par son extrémité chanfreinée (6) de manière à dilater la bague (2) dans l'orifice (4).

2. Procédé selon la revendication 1, caractérisé en ce qu'une rainure (7) de hauteur h correspondant à l'épaisseur e de l'anneau ou orifice (4) est usinée à la périphérie de la bague femelle (2) à l'emplacement de la bague (2) devant se trouver au niveau de l'anneau ou orifice (4).

3. Procédé selon la revendication 2, caractérisé en ce que la profondeur p de la rainure (7) est telle que $j + p > E > j$ et réalise ainsi un assemblage à rotation, E étant l'épaisseur du tube (3) ou de la bague (2').

4. Procédé selon les revendications 2 ou 3, caractérisé en ce que la bague femelle (2) comporte plusieurs rainures (7) successives et que plusieurs anneaux parallèles sont assemblés sur la bague (2).

**Patentansprüche**

1. Verfahren zum Verbinden eines dünnen Rohres (3) mit einem ggf. rohrförmigen Profil (1) mit Hilfe eines Zwischenringes (2) mit im wesentlichen den gleichen Querabmessungen und aus gleichartigem Material, wobei das dünne Rohr (3) außen (6) abgeschrägt ist und der Zwischenring (2) konisch (5) an einem seiner Enden ausgebohrt ist, dadurch gekennzeichnet, daß

a) man im Profil eine Öffnung (4) maschinell anbringt, deren Durchmesser gleich dem Außendurchmesser des Rohres oder des Ringes, vergrößert um ein angemessenes Spiel (j), ist,

b) man den Zwischenring (2) in die Öffnung (4) so einführt, daß die Basis seines konisch (5) ausgebohrten Endes außerhalb des rohrförmigen Profils (1) ist, während sich sein anderes Ende auf der anderen Wand des Profils abstützt,

c) man in der Richtung (F) das dünne Rohr (3) mit seinem abgeschrägten Ende (6) in den Zwischenring (2) so eintreibt, daß der Ring (2) in die Öffnung (4) ausgedehnt wird.

2. Verfahren nach dem Anspruch 1, dadurch gekennzeichnet, daß eine Nut (7) mit einer der Dicke (e) des Ringes oder der Öffnung (4) entsprechenden Höhe (h) am Umfang des Buchsenringes (2) an der Stelle des Ringes (2) ausgearbeitet wird, die sich auf Höhe des Ringes oder der Öffnung (4) befinden soll.

3. Verfahren nach dem Anspruch 2, dadurch gekennzeichnet, daß die Tiefe (p) der Nut (7) derart ist, daß $j + p > E > j$ und so eine Rotationsverbindung ergibt, wobei E die Dicke des Rohres (3) oder des Ringes (2') ist.

4. Verfahren nach den Ansprüchen 2 oder 3, dadurch gekennzeichnet, daß der Buchsenring (2) mehrere aufeinanderfolgende Nuten (7) aufweist und daß mehrere parallele Ringe mit dem Ring (2) verbunden werden.

**Claims**

1. A process for joining a thin tube (3) to a possibly tubular member (1) by means of an intermediate ring member (2) which is of substantially the same transverse dimensions and of similar material, the thin tube (3) being externally chamfered (6) and the intermediate ring member (2) being conically bored (5) at one of their ends, characterized in that:

a) an opening (4) is machined in the member (1), the diameter of the opening being equal to the outside diameter of the tube or the ring member, plus a suitable clearance j,

b) the intermediate ring member (2) is introduced into the opening (4) in such a way that the base of its conically bored end (5) is outside the tubular member (1) when its other end bears against the other wall of the member (1), and

c) the thin tube (3) is forced in the direction (F) into the intermediate ring member (C) by way of its chamfered end (6) so as to expand the ring member (2) in the opening (4).

2. A process according to claim 1, characterized in that a groove (7) which is of a height h corresponding to the thickness e of the ring or opening (4) is machined at the periphery of the female ring member (2) at the location of the ring member (2) which is to be at the level of the ring or opening (4).

3. A process according to claim 2 characterized in that the depth p of the groove (7) is such that $j + p > E > j$ and thus forms a rotatable assembly, E being the thickness of the tube (3) or the ring member (2').

4. A process according to claim 2 or claim 3, characterized in that the female ring member (2) comprises a plurality of successive grooves (7) and that a plurality of parallel rings are assembled on the ring member (2).

FIG.1

FIG.2

FIG.3

FIG.4

FIG 5

FIG 6